# EUROPEAN PATENT SPECIFICATION

(11) **EP 1 344 754 B1**
(45) Date of publication and mention of the grant of the patent: **27.09.2006**
(21) Application number: 03004946.4
(22) Date of filing: 10.03.2003
(51) Int. Cl.: C04B 24/26, C04B 24/32

(54) **Admixture for a hydraulic composition**
Zusatzmittel für hydraulische Zusammensetzungen
Adjuvant pour des compositions hydrauliques

(30) Priority: 11.03.2002 JP 2002065050
(43) Date of publication of application: 17.09.2003
(60) Divisional application: 04018566.2
(73) Proprietor: KAO CORPORATION, Chuo-Ku Tokyo (JP)
(72) Inventor: Hamada, Daisuke, Wakayama-shi, Wakayama (JP); Yamato, Fujio, Wakayama-shi, Wakayama (JP); Shimoda, Masaaki, Wakayama-shi, Wakayama (JP)
(74) Representative: HOFFMANN EITLE

(56) References cited:
- EP-A- 0 792 850
- EP-A- 1 110 981
- WO-A-02/096823
- JP-A- 11 060 305
- JP-A- 59 162 163
- JP-A- 2000 327 385
- PATENT ABSTRACTS OF JAPAN vol. 1997, no. 07, 31 July 1997 (1997-07-31) & JP 09 067153 A (KAO CORP), 11 March 1997 (1997-03-11)
- PATENT ABSTRACTS OF JAPAN vol. 016, no. 479 (C-0992), 6 October 1992 (1992-10-06) & JP 04 175254 A (ENU EMU BII:KK), 23 June 1992 (1992-06-23)

## Description

This invention relates to an admixture for a hydraulic composition, a process for its preparation and the use thereof. This invention relates in particular to an admixture for a hydraulic composition which is excellent in shelf stability and capable of endowing a hydraulic composition for cement pastes, mortar and concrete or the like with excellent fluidity and fluidity retention without being influenced by variations in hydraulic powders of cement

As cement admixtures such as a high-performance water-reducing agent, those based on polycarboxylic acids are known, but the performance of polycarboxylic acid-based dispersants is known to be varied depending on the concentration of sulfate ions in hydraulic slurry. The concentration of sulfate ions in a hydraulic slurry is varied depending on the type of cement etc., so that when the type of cement is changed, the dispersants may fail to exhibit their initial desired effect. To solve this problem, JP-A 2000-327385 discloses a dispersant with less variation in performance against variation in sulfate ions. In the reference the water-reducing performance is improved to a certain extent, but the problem of variation in fluidity retention has not been completely solved.

On one hand, JP-A 11-60305 and JP-A 9-67153 disclose techniques of improving fluidity retention by both a polyalkylene glycol ester monomer/carboxylic acid monomer copolymer and at least one kind of unsaturated carboxylic acid-based homopolymer or copolymer.

The polycarboxylic acid-based polymer can, even in an acid form, be used directly as a dispersant for cement. But from the viewpoint of inhibiting acid hydrolysis of esters or corrosion of material of a tank or the like, the polymer is often used in a salt form after neutralization by an alkali. For handling etc., the polymer is preferably in the form of an aqueous solution.

Each of the above-mentioned two copolymers, when used at an solid concentration of 10 weight-% or more as usual, is in the form of a homogeneous aqueous solution, but the two are mixed for use, the mixture may be separated after being left for a predetermined time, thus making it sometimes necessary to add the two copolymers separately to cement in order to provide a stable performance. In the case of the mixed product rendered highly viscous to suppress the above-mentioned separation, their solution is so highly viscous as to be poor in dropping at the time of dosing, thus suffering from varying performance attributable to errors in dosing. When the polymers different in the content of carboxyl groups are mixed, there arises a difference in solubility between the polymers, which would sometimes cause phase separation, so there is a demand for polymers excellent in shelf stability even in the form of an aqueous solution.

EP 0 792 850 A1 relates to a cement composition comprising a copolymer of short-chain polyalkylene glycol (meth)acrylate, a long-chain polyalkylene glycol (meth)acrylate, a carboxylic acid monomer, and a monomer copolymerizable with these monomers.

WO 02/096823 A1, which is a document according to Art. 54 (3) EPC, describes a cement admixture comprising two specified polymers in a specified mass ratio.

The object of this invention is to provide a liquid admixture for a hydraulic composition. The admixture is excellent in shelf stability and handling and capable of exhibiting dispersibility and dispersion retention stably even if the type of hydraulic powders of cement is changed.

This invention relates to an admixture for a hydraulic composition which is in the form of a homogeneous aqueous solution which is as defined in claim 1 and wherein a 5-fold (ratio by weight) dilution (dilution to 5 times as much an amount as the initial) of the admixture with water has an electric conductivity of not higher than 45 mS/cm at 25°C,

It is preferable that (1) the polycarboxylic acid-based dispersant is selected from 1) and (2) the polycarboxylic acid-based dispersant is selected from 2):
1) dispersants comprising a water-soluble salt of a homopolymer of an unsaturated carboxylic acid selected from an unsaturated monocarboxylic acid and an unsaturated dicarboxylic acid or of a copolymer of two or more of the unsaturated carboxylic acids,
2) dispersants comprising a copolymer obtained by polymerizing a monomer (a) represented by formula (A) : 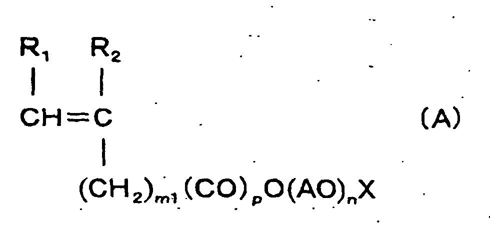
wherein R₁ and R₂ each represents a hydrogen atom or a methyl group, m1 is a number of 0 to 2, p is 0 or 1, AO is a C₂₋₄ oxyalkylene group, n is a number of 2 to 300 and X represents a hydrogen atom or a C₁₋₂₂ alkyl group;
with at least one monomer (b) selected from compounds represented by formulae (B) and (C): 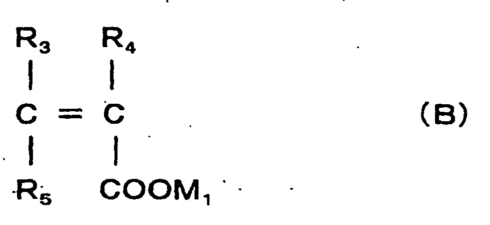 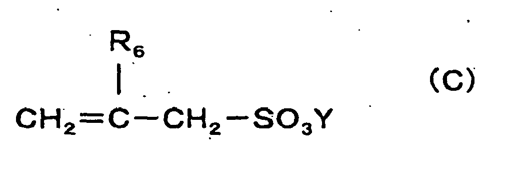 wherein R₃ to R₅ are the same as or different from one another and each represent a hydrogen atom, a methyl group or (CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or a substituted amine salt and m2 is a number of 0 to 2.

The admixture has the total solid of the polycarboxylic acid-based dispersant (1) and the polycarboxylic acid-based dispersant (2) in the range of 10 to 40 percent by weight. The admixture has the weight ratio [(1)/(2)] of the polycarboxylic acid-based dispersant (1) to the polycarboxylic acid-based dispersant (2) in the range of 3/97 to 40/60.

The above shown admixture satisfies any one of the following conditions (a) to (f):
(a) the total amount (hereinafter referred to as solids content) of the polycarboxylic acid-based dispersants (1) and (2) in the admixture for a hydraulic composition is more than 30 to 40 weight-%, and the dispersants are neutralized with potassium hydroxide or sodium hydroxide, and the degree of neutralization thereof is 0.15 or less,
(b) the solids content is more than 20 to 30 weight-%, and the dispersants are neutralized with potassium hydroxide or sodium hydroxide, and the degree of neutralization thereof is 0.4 or less
(c) the solids content is 20 weight-% or less, and then dispersants are neutralized with potass.ium hydroxide or sodium hydroxide, and the degree of neutralization thereof is 1 or less,
(d) the solids content is more than 30 to 40 weight-%, and the dispersants are neutralized with triethanolamine, and the degree of neutralization thereof is 0.25,
(e) the solids content is more than 20 to 30 weight-%, and the dispersants are neutralized with triethanolamine, and the degree of neutralization thereof is 1 or less, and
(f) the solids content is 20 weight-% or less, and the dispersants are neutralized with triethanolamine, and the degree of neutralization thereof is 1.5 or less.

The invention provides a process for preparing an admixture for a hydraulic composition, being homogeneous and having a pH of 4 to 9, comprising adding an alkali to an aqueous solution comprising the polycarboxylic acid-based dispersant (1) described above and the polycarboxylic acid-based dispersant (2) described above in the total solid of 10 to 40 percent by weight.

The invention moreover provides the use of the above admixture for improving fluidity retention of a hydraulic composition, comprising water and a hydraulic powder and having a sulfate ion concentration of 2,500 to 40,000 mg/kg in the aqueous solution thereof.

As used herein, the phrase "in the form of a homogeneous aqueous solution" refers to a state free of liquid or solid separation, precipitation or rotation when observed with naked eyes. Any part of the solution are estimated as equivalent to other parts in view of the chemical organization thereof. The admixture for a hydraulic composition is in the form of a homogenious aqueous solution particularly preferably after storage at 20°C for 1 month after preparation.

The phrase "ratio of carboxylic acid monomers" means the ratio by weight of unsaturated carboxylic acids to the total monomers used in producing the polymer. When the monomer is a salt, the weight of its corresponding acid is calculated, and in the case of a structure for example an anhydride such as maleic anhydride, the weight of the anhydride is calculated.

In this invention, the dispersant comprising a polymer wherein the ratio of carboxylic acid monomers is higher than 30 % by weight is used in combination with the dispersant comprising a polymer wherein the ratio of carboxylic acid monomers is not higher than 30 % by weight, whereby the performance of the hydraulic composition is inhibited from being varied due to a change in sulfate ions in hydraulic slurry, and further the electric conductivity of a 5-fold (ratio by weight) dilution, with water, of the admixture comprising two kinds of dispersants mixed therein is regulated to be not higher than 45 mS/cm at 25°C, whereby a homogeneous admixture excellent in shelf stability and handling is achieved.

In the admixture for a hydraulic composition two kinds of dispersants, that is, dispersants (1) and (2), are used. Then two or more kinds of one or both of the dispersants can also be used. In this case, dispersant polymers different in e.g. average molecular weight or salt are regarded as different dispersants even if they are identical in the type of used monomer. Further, copolymers different in e.g. copolymerization molar ratio are regarded as different dispersants even if they are identical in combination of monomers. As the indicator to determine whether dispersants are identical or not, mention is made of the type of monomer, weight-average molecular weight, molar ratio of monomers, etc.

In place of the dispersant (I), alternatively, an oxycarboxylic acid or a salt threof may be used.

Preferably, the polycarboxylic acid-based dispersant (1) used in this invention is selected from the following 1), and the polycarboxylic acid-based dispersant (2) is selected from the following 2):
1) dispersants (referred to collectively as dispersant (1a)) comprising a water-soluble salt of a homopolymer of an unsaturated carboxylic acid selected from an unsaturated monocarboxylic acid and an unsaturated dicarboxylic acid or of a copolymer of two or more kinds of such unsaturated carboxylic acids, and
2) dispersants (referred to collectively as dispersant (2a)) comprising a copolymer obtained by polymerizing a monomer (a) represented by formula (A) with at least one monomer (b) selected from compounds represented by the formulae (B) and (C) 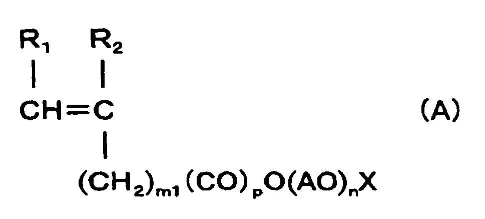
wherein R₁ and R₂ each represents a hydrogen atom or a methyl group, m1 is a number of 0 to 2, p is 0 or 1, AO is a C₂₋₄ oxyalkylene group, n is a number of 2 to 300 and X represents a hydrogen atom or a C₁₋₂₂ alkyl group. 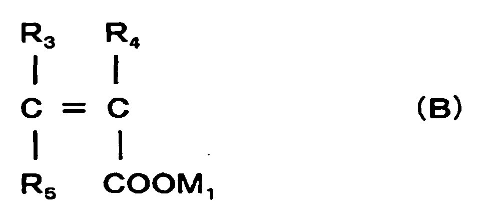 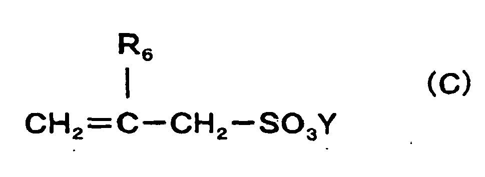 wherein R₃ to R₅ are the same as or different from one another and each represent a hydrogen atom, a methyl group or (CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or substituted amine salt, and m2 is a number of 0 to 2.

### <Dispersant (1a)>

The dispersant (1a) is a water-soluble salt of a homopolymer of an unsaturated carboxylic acid selected from an unsaturated monocarboxylic acid and an unsaturated dicarboxylic acid or of a copolymer of two or more kinds of such unsaturated carboxylic acids, and the unsaturated monocarboxylic acid includes acrylic acid, methacrylic acid, and the like, the unsaturated dicarboxylic acid includes maleic acid, fumaric acid, itaconic acid, and the like, and the water-soluble salt thereof includes alkali salts. Examples thereof include homopolymers such as sodium polyacrylate, sodium polymethacrylate, sodium polymaleate, copolymers such as acrylic acid-sodium maleate. In the copolymer as the dispersant (1a), the ratio of the unsaturated monocarboxylic acid and the unsaturated dicarboxylic acid is higher than 30 weight-%, preferably 40 to 100 weight-%, more preferably 50 to 100 weight-%.

The weight-average molecular weight of the copolymer as the dispersant (1a) (polyethylene oxide-equivalent molecular weight determined by gel permeation chromatography) is preferably 500 to 100,000, more preferably 1, 000 to 50, 000, from the viewpoint of dispersibility and viscosity.

### <Dispersant (2a)>

The copolymer as the dispersant (2a) is a water-soluble vinyl copolymer having an oxyalkylene group. The monomer (a) represented by the formula (A) used in production of the copolymer as the dispersant (2a) is preferably an ester of (meth)acrylic acid or (half)ester of maleic acid with an alkyl-terminated polyalkylene glycol such as methoxy polyethylene glycol, methoxy polypropylene glycol, methoxy polybutylene glycol, or ethoxy polyethylene polypropylene glycol, or an ether of (meth)allyl alcohol with the alkyl-terminated polyalkylene glycol, or an adduct having ethylene oxide (hereinafter referred to as EO) or propylene oxide (hereinafter referred to as PO) added to (meth)acrylic acid, maleic acid or (meth) allyl alcohol. R₁ is preferably a hydrogen atom, p is preferably 1, and m1 is preferably 0. It is more preferably an ester of (meth)acrylic acid with an alkoxy polyethylene glycol, in particular methoxy polyethylene glycol. EO, PO or butyleneoxide (BO) may be used for AO. X is preferably a hydrogen or a C₁₋₄ alkyl group.

The average number of polyalkylene glycol molecules added, i.e. "n" in the formula (A), is 2 to 300, preferably 5 to 200, particularly preferably 20 to 150 from the viewpoint of dispersibility and fluidity retention (slump retention). In the copolymers different in AO, for example those containing EO and PO, the mode of addition thereof is not particularly limited, and any of random addition, block addition and alternate addition can be used.

The monomer represented by the formula (B) includes acrylic acid, methacrylic acid, crotonic acid, and metal salts thereof. As the unsaturated dicarboxylic acid monomer, use is made of maleic anhydride, maleic acid, itaconic anhydride, itaconic acid, citraconic anhydride, citraconic acid or fumaric acid, or an alkali metal salt, alkaline earth metal salt, ammonium salt, amine salt or substituted amine salt thereof.

As the monomer represented by the formula (C), use is made of allylsulfonic acid or methallylsulfonic acid, or an alkali metal salt, alkaline earth metal salt, ammonium salt, amine salt or substituted amine salt thereof.

From the viewpoint of dispersibility, fluidization, fluidity retention and separation resistance, the mole ratio of the monomer (a) to the monomer (b) as the reaction units constituting the copolymer as the dispersant (2a), that is, the monomer (a) /the monomer (b), is preferably 1/100 to 10000/100, more preferably 1/100 to 200/100, especially 1/100 to 100/100. In the dispersant (2a), however, the ratio of carboxylic acid monomers as monomers represented by the formula (B) should be 30 weight-% or less. The ratio of the unsaturated carboxylic acid monomers charged is preferably 3 to 30 weight-% and simultaneously 50 to 99 mol-%, more preferably 5 to 25 weight-% and simultaneously 60 to 95 mol-%.

The copolymer as the dispersant (2a) can be produced in a known method. The method includes, for example, solvent polymerization methods in JP-A 59-162163, JP-B 2-11542, JP-B 2-7901, JP-B 2-7897 and the like.

The solvent used in the solvent polymerization method includes water, methyl alcohol, ethyl alcohol, isopropyl alcohol, benzene, toluene, xylene, cyclohexane, n-hexane, aliphatic hydrocarbons, ethyl acetate, acetone, methyl ethyl ketone, etc. In consideration of handling and reaction facilities, water and primary to quaternary alcohols are preferable.

As an aqueous polymerization initiator, a water-soluble initiator such as an ammonium or alkali metal persulfate or hydrogen peroxide is used. For solvent polymerization using a non-aqueous solvent, benzoyl peroxide, lauroyl peroxide or the like is used as the polymerization initiator.

An accelerator such as sodium hydrogen sulfite, mercaptoethanol or an amine compound can also be used in combination with the polymerization initiator, and the polymerization initiator or the accelerator can be suitably selected for use.

The weight-average molecular weight of the copolymer as the dispersant (2a) (polyethylene oxide-equivalent molecular weight determined by gel permeation chromatography) is preferably 1,000 to 500,000, more preferably 3,000 to 150,000, from the viewpoint of dispersibility and fluidity retention(slump retention).

Further, the copolymer as the dispersant (2a) may be reacted with other copolymerizable monomers in such a range that the effect of this invention is not deteriorated. Example of such monomers include acrylonitrile, acrylate, acrylamide, methacrylamide, styrene, styrenesulfonic acid, etc.

In this invention, two or more kinds of the dispersant (2a) are preferably simultaneously used. In this case, those different in n (AO chain length) in the formula (A), those different in the copolymerization molar ratio of the monomers and those different in the monomers of the formula (B) are preferable. In particular, two or more kinds of copolymers different in n by 10 or more in the formula (A) are preferably contained. For example, one of the copolymers is produced from the monomer (a) wherein n = 2 to 100, preferably 2 to 50, more preferably 5 to 20, and the other from the monomer (a) wherein n = 20 to 300, preferably 50 to 200, more preferably 100 to 150, provided that the two kinds of monomers are different in n by 10 or more.

The two or more kinds of dispersants are selected preferably from those wherein the ratio of unsaturated carboxylic acid monomers charged is preferably 3 to 30 weight-% and simultaneously 50 to 99 mole-%, more preferably from those wherein the ratio of unsaturated carboxylic acid monomers charged is 5 to 25 weight-% and simultaneously 60 to 95 mole-%.

The oxycarboxylic acid to use in the invention preferably has 2 to 20 carbon atoms, more preferably 2 to 10. It preferably includes 1 to 8 carboxylic groups, in particular 1 to 3. A salt of an oxycarboxylic acid may be used. For example it may include gluconic acid, glucoheptonic acid, galactonic acid, citric acid, tartaric acid, malic acid, glycolic acid, lactic acid, α-oxybutyric acid, lactobionic acid or a salt thereof. The salt may include an inorganic salt such as sodium salt or potassium salt or an organic salt. Gluconic acid, glucoheptonic acid or a salt thereof, in particular sodium salt, is preferable from the viewpoint of dispersion of cement.

### <Admixture for hydraulic composition>

The admixture for a hydraulic composition according to this invention is in the form of an aqueous solution, and the electric conductivity of a 5-fold (ratio by weight) dilution of the admixture with water is not higher than 45 mS/cm, preferably not higher than 40 mS/cm, more preferably not higher than 35 mS/cm. The lower limit of the electric conductivity is 0 mS/cm. This electric conductivity was measured at 25°C by a conductivity meter (HORIBA DS-15).

The Admixture for a hydraulic composition according to the invention is a homogeneous mixed liquid including the polycarboxylic acid dispersant (1) and the polycarboxylic acid dispersant (2). The homogeneous mixed liquid means no separation observed by eyes in two or more phases of dispersants, being in the form of a solution or an emulsion. Any part of the solution are estimated as equivalent to other parts in view of the chemical organization thereof.

By selecting a neutralizing agent or a neutralization degree or controlling the salt concentration of the admixture in terms of the electric conductivity in this invention, a suitable total solid of the polycarboxylic acid dispersant (1) and the polycarboxylic acid dispersant (2) (solid content) of the composition mixture may be determined and the admixture can exhibit dispersibility and fluidity retention performance stably against a change in the type of hydraulic powders of cement and is excellent in shelf stability and handling. Such working mechanism is estimated as follows: That is, the dispersant (1) is adsorbed rapidly onto the surface of cement, to relieve the influence of sulfate ions eluted from the powder, and simultaneously the concentration of the residual dispersant (2) is secured thereby imparting a given dispersion retention. The dispersants (1) and (2) are dissolved homogeniously, thus stably exhibiting the desired performance. In the invention, it is considered that oxycarboxylic acid functions in the same way as the dispersant (1).

The admixture for a hydraulic composition comprises the dispersants (1) and (2) in an amount of 10 to 40 weight-% in total, preferably 15 to 35 weight-%, more preferably 20 to 30 weight-% (in terms of solids content). Even in this range, a stable aqueous solution can be obtained.

In the admixture for a hydraulic composition the weight ratio of the dispersant (1) to (2), (dispersant (1) to dispersant (2)), is 3/97 to 40/60, preferably 5/95 to 30/70, in particular 10/90 to 20/80.

The admixture for a hydraulic composition according to this invention comprises oxycarboxylic acid or a salt thereof and the dispersant (2) in an amount of preferably 10 to 40 weight-% in total, more preferably 15 to 35 weight-%, still more preferably 20 to 30 weight-% (in terms of solids content). Even in this range, a stable aqueous solution can be obtained.

In the admixture for a hydraulic composition according to this invention, the weight ratio of oxycarboxylic acid or a salt thereof to the dispersant (2), (oxycarboxylic acid or a salt thereof to the dispersant (2)), is preferably 3/97 to 60/40, more preferably 5/95 to 50/50, in particular 10/90 to 40/60.

The pH value at 20°C of the admixture for a hydraulic composition according to this invention is 4 to 9, particularly 5 to 8 from the viewpoint of hyrolysis of esters which are included in a dispersant of the admixture or prevention of corrosion of material of a storage tank or the like.

To achieve the electric conductivity upon dilution, mention is made of a method wherein the dispersants (1a) and (2a) are simultaneously used and the solids-content concentration of the two is regulated in the range of 10 to 40 weight-%, especially 15 to 35 weight-%, particularly 20 to 30 weight-%. As another method, mention is made of a method of controlling the degree of neutralization with an acid or an alkali.

The acid used for controlling the degree of neutralization includes acetic acid, hydrochloric acid, sulfuric acid, and the like, and the alkali therefor includes potassium hydroxide, sodium hydroxide and triethanolamine. From the viewpoint of reducing the salt concentration in the admixture for a hydraulic composition, the acid dispersant is preferably neutralized with an alkali. In particular, neutralization with triethanolamine is preferable to achieve homogeneousness even at a high degree of neutralization.

The process for producing the admixture for a hydraulic composition according to this invention includes, for example, a process wherein the polycarboxylic acid-based dispersants (1) and (2) are used to prepare an aqueous solution containing the dispersants (1) and (2) in an amount of 10 to 40 % by weight in the total solid, and then an alkali is added thereto under stirring to prepare a homogenious solution with a pH value of 4 to 9. The dispersants (1) and (2) may be preferably used in the form of the polycarboxylic acid-based dispersants.

The admixture for a hydraulic composition satisfies any one of the following conditions (a) to (f):
(a) the total amount (hereinafter referred to as solids content) of the polycarboxylic acid-based dispersants (1) and (2) in the admixture for a hydraulic composition is more than 30 to 40 weight-%, and the dispersants are neutralized with potassium hydroxide or sodium hydroxide, and the degree of neutralization thereof is 0.15 or less,
(b) the solids content is more than 20 to 30 weight-%, and the dispersants are neutralized with potassium hydroxide or sodium hydroxide, and the degree of neutralization thereof is 0.4 or less,
(c) the solids content is 20 weight-% or less, and the dispersants are neutralized with potassium hydroxide or sodium hydroxide, and the degree of neutralization thereof is 1 or less,
(d) the solids content is more than 30 to 40 weight-%, and the dispersants are neutralized with triethanolamine, and the degree of neutralization thereof is 0.25,
(e) the solids content is more than 20 to 30 weight-%, and the dispersants are neutralized with triethanolamine, and the degree of neutralization thereof is 1 or less, and
(f) the solids content is 20 weight-% or less, and the dispersants are neutralized with triethanolamine, and the degree of neutralization thereof is 1.5 or less.
   More preferably, the ratio by weight of the polycarboxylic acid-based dispersant (1) to the polycarboxylic acid-based dispersant (2) [polycarboxylic acid-based dispersant (1)/polycarboxylic acid-based dispersant (2)] is 30/70 to 1/99, and the following conditions (g) or (h) are met:
(g) the ratio of carboxylic acid monomers in the polycarboxylic acid-based dispersant (1) is 65 (exclusive) to 100 weight-%, and any one of the following (g-1) to (g-3) is met:
   (g-1) the ratio of carboxylic acid monomers in the polycarboxylic acid-based dispersant (2) is 20 (exclusive) to 30 (exclusive) weight-%, and any one of the following (g-1-1) to (g-1-5) is further met:
      (g-1-1) the solids content is 30 (exclusive) to 40 weight-%, and the dispersants are neutralized with potassium hydroxide or sodium hydroxide, and the degree of neutralization thereof is 0.35 or less,
      (g-1-2) the solids content is 20 (exclusive) to 30 weight-%, and the dispersants are neutralized with potassium hydroxide or sodium hydroxide, and the degree of neutralization thereof is 0.7 or less,
      (g-1-3) the solids content is 20 weight-% or less, and the dispersants are neutralized with potassium hydroxide or sodium hydroxide, and the degree of neutralization thereof is 1 or less,
      (g-1-4) the solids content is 30 (exclusive) to 40 weight-%, and the dispersants are neutralized with triethanolamine, and the degree of neutralization thereof is 1 or less,
      (g-1-5) the solids content is 30 weight-% or less, and the dispersants are neutralized with triethanolamine, and the degree of neutralization thereof is 1.5 or less,
   (g-2) the ratio of carboxylic acid monomers in the polycarboxylic acid-based dispersant (2) is 10 (exclusive) to 20 weight-%, and any one of the following (g-2-1) to (g-2-5) is further satisfied:
      (g-2-1) the solids content is 30 (exclusive) to 40 weight-%, and the dispersants are neutralized with potassium hydroxide or sodium hydroxide, and the degree of neutralization thereof is 0.25 or less,
      (g-2-2) the solids content is 20 (exclusive) to 30 weight-%, and the dispersants are neutralized with potassium hydroxide or sodium hydroxide, and the degree of neutralization thereof is 0.5 or less,
      (g-2-3) the solids content is 20 weight-% or less, and the dispersants are neutralized with potassium hydroxide or sodium hydroxide, and the degree of neutralization thereof is 1 or less,
      (g-2-4) the solids content is 30 (exclusive) to 40 weight-%, and the dispersants are neutralized with triethanolamine, and the degree of neutralization thereof is 1 or less,
      (g-2-5) the solids content is 30 weight-% or less, and the dispersants are neutralized with triethanolamine, and the degree of neutralization thereof is 1.5 or less,
   (g-3) the ratio of carboxylic acid monomers in the polycarboxylic acid-based dispersant (2) is 10 weight-% or less, and any one of the following (g-3-1) to (g-3-6) is further met:
      (g-3-1) the solids content is 30 (exclusive) to 40 weight-%, and the dispersants are neutralized with potassium hydroxide or sodium hydroxide, and the degree of neutralization thereof is 0.15 or less,
      (g-3-2) the solids content is 20 (exclusive) to 30 weight-%, and the dispersants are neutralized with potassium hydroxide or sodium hydroxide, and the degree of neutralization thereof is 0.4 or less,
      (g-3-3) the solids content is 20 weight-% or less, and the dispersants are neutralized with potassium hydroxide or sodium hydroxide, and the degree of neutralization thereof is 1 or less,
      (g-3-4) the solids content is 30 (exclusive) to 40 weight-%, and the dispersants are neutralized with triethanolamine, and the degree of neutralization thereof is 0.25 or less,
      (g-3-5) the solids content is 20 (exclusive) to 30 weight-%, and the dispersants are neutralized with triethanolamine, and the degree of neutralization thereof is 1 or less,
      (g-3-6) the solids content is 20 weight-% or less, and the dispersants are neutralized with triethanolamine, and the degree of neutralization thereof is 1.5 or less,
(h) the ratio of carboxylic acid monomers in the polycarboxylic acid-based dispersant (1) is 30 to 65 weight-%, and any one of the following (h-1) to (h-3) is further met:
   (h-1) the ratio of carboxylic acid monomers in the polycarboxylic acid-based dispersant (2) is 20 (exclusive) to 30 weight-%, and any one of the following (h-1-1) to (h-1-5) is further met:
      (h-1-1) the solids content is 30 (exclusive) to 40 weight-%, and the dispersants are neutralized with potassium hydroxide or sodium hydroxide, and the degree of neutralization thereof is 0.45 or less,
      (h-1-2) the solids content is 20 (exclusive) to 30 weight-%, and the dispersants are neutralized with potassium hydroxide or sodium hydroxide, and the degree of neutralization thereof is 1 or less,
      (h-1-3) the solids content is 20 weight-% or less, and the dispersants are neutralized with potassium hydroxide or sodium hydroxide, and the degree of neutralization thereof is 1.5 or less,
      (h-1-4) the solids content is 30 (exclusive) to 40 weight-%, and the dispersants are neutralized with triethanolamine, and the degree of neutralization thereof is 1 or less,
      (h-1-5) the solids content is 30 weight-% or less, and the dispersants are neutralized with triethanolamine, and the degree of neutralization thereof is 1.5 or less,
   (h-2) the ratio of carboxylic acid monomers in the polycarboxylic acid-based dispersant (2) is 10 (exclusive) to 20 weight-%, and any one of the following (h-2-1) to (h-2-5) is further met:
      (h-2-1) the solids content is 30 (exclusive) to 40 weight-%, and the dispersants are neutralized with potassium hydroxide or sodium hydroxide, and the degree of neutralization thereof is 0.40 or less,
      (h-2-2) the solids content is 20 (exclusive) to 30 weight-%, and the dispersants are neutralized with potassium hydroxide or sodium hydroxide, and the degree of neutralization thereof is 0.75 or less,
      (h-2-3) the solids content is 20 weight-% or less, and the dispersants are neutralized with potassium hydroxide or sodium hydroxide, and the degree of neutralization thereof is 1 or less,
      (h-2-4) the solids content is 30 (exclusive) to 40 weight-%, and the dispersants are neutralized with triethanolamine, and the degree of neutralization thereof is 1 or less,
      (h-2-5) the solids content is 30 weight-% or less, and the dispersants are neutralized with triethanolamine, and the degree of neutralization thereof is 1.5 or less,
   (h-3) the ratio of carboxylic acid monomers in the polycarboxylic acid-based dispersant (2) is 10 weight-% or less, and any one of the following (h-3-1) to (h-3-6) is further met:
      (h-3-1) the solids content is 30 (exclusive) to 40 weight-%, and the dispersants are neutralized with potassium hydroxide or sodium hydroxide, and the degree of neutralization thereof is 0.25 or less,
      (h-3-2) the solids content is 20 (exclusive) to 30 weight-%, and the dispersants are neutralized with potassium hydroxide or sodium hydroxide, and the degree of neutralization thereof is 0.6 or less,
      (h-3-3) the solids content is 20 weight-% or less, and the dispersants are neutralized with potassium hydroxide or sodium hydroxide, and the degree of neutralization thereof is 1 or less,
      (h-3-4) the solids content is 30 (exclusive) to 40 weight-%, and the dispersants are neutralized with triethanolamine, and the degree of neutralization thereof is 0.25 or less,
      (h-3-5) the solids content is 20 (exclusive) to 30 weight-%, and the dispersants are neutralized with triethanolamine, and the degree of neutralization thereof is 1 or less,
      (h-3-6) the solids content is 20 weight-% or less, and the dispersants are neutralized with triethanolamine, and the degree of neutralization thereof is 1.5 or less.

   Particularly preferably, the ratio by weight of the polycarboxylic acid-based dispersant (1) to the polycarboxylic acid-based dispersant (2) [polycarboxylic acid-based dispersant (1)/polycarboxylic acid-based dispersant (2)] is 15/85 to 1/99, and the following conditions (i) or (j) are met:
(i) the ratio of carboxylic acid monomers in the polycarboxylic acid-based dispersant (1) is 65 (exclusive) to 100 weight-%, and any one of the following (i-1) to (i-3) is further satisfied:
   (i-1) the ratio of carboxylic acid monomers in the polycarboxylic acid-based dispersant (2) is 20 (exclusive) to 30 weight-%, and any one of the following (i-1-1) to (i-1-5) is further met:
      (i-1-1) the solids content is 30 (exclusive) to 40 weight-%, and the dispersants are neutralized with potassium hydroxide or sodium hydroxide, and the degree of neutralization thereof is 0.45 or less,
      (i-1-2) the solids content is 20 (exclusive) to 30 weight-%, and the dispersants are neutralized with potassium hydroxide or sodium hydroxide, and the degree of neutralization thereof is 0.8 or less,
      (i-1-3) the solids content is 20 weight-% or less, and the
      dispersants are neutralized with potassium hydroxide or sodium hydroxide, and the degree of neutralization thereof is 1 or less,
      (i-1-4) the solids content is 30 (exclusive) to 40 weight-%, and the dispersants are neutralized with triethanolamine, and the degree of neutralization thereof is 1 or less,
      (i-1-5) the solids content is 30 weight-% or less, and the dispersants are neutralized with triethanolamine, and the degree of neutralization thereof is 1.5 or less,
   (i-2) the ratio of carboxylic acid monomers in the polycarboxylic acid-based dispersant (2) is 10 (exclusive) to 20 weight-%, and any one of the following (i-2-1) to (i-2-5) is further met:
      (i-2-1) the solids content is 30 (exclusive) to 40 weight-%, and the dispersants are neutralized with potassium hydroxide or sodium hydroxide, and the degree of neutralization thereof is 0.35 or less,
      (i-2-2) the solids content is 20 (exclusive) to 30 weight-%, and the dispersants are neutralized with potassium hydroxide or sodium hydroxide, and the degree of neutralization thereof is 0.6 or less,
      (i-2-3) the solids content is 20 weight-% or less, and the dispersants are neutralized with potassium hydroxide or sodium hydroxide, and the degree of neutralization thereof is 1 or less,
      (i-2-4) the solids content is 30 (exclusive) to 40 weight-%, and the dispersants are neutralized with triethanolamine, and the degree of neutralization thereof is 1 or less,
      (i-2-5) the solids content is 30 weight-% or less, and the dispersants are neutralized with triethanolamine, and the degree of neutralization thereof is 1.5 or less,
   (i-3) the ratio of carboxylic acid monomers in the polycarboxylic acid-based dispersant (2) is 10 weight-% or less, and any one of the following (i-3-1) to (i-3-6) is further met:
      (i-3-1) the solids content is 30 (exclusive) to 40 weight-%, and the dispersants are neutralized with potassium hydroxide or sodium hydroxide, and the degree of neutralization thereof is 0.25 or less,
      (i-3-2) the solids content is 20 (exclusive) to 30 weight-%, and the dispersants are neutralized with potassium hydroxide or sodium hydroxide, and the degree of neutralization thereof is 0.5 or less,
      (i-3-3) the solids content is 20 weight-% or less, and the dispersants are neutralized with potassium hydroxide or sodium hydroxide, and the degree of neutralization thereof is 1 or less,
      (i-3-4) the solids content is 30 (exclusive) to 40 weight-%, and the dispersants are neutralized with triethanolamine, and the degree of neutralization thereof is 0.35 or less,
      (i-3-5) the solids content is 20 (exclusive) to 30 weight-%, and the dispersants are neutralized with triethanolamine, and the degree of neutralization thereof is 1 or less,
      (i-3-6) the solids content is 20 weight-% or less, and the dispersants are neutralized with triethanolamine, and the degree of neutralization thereof is 1.5 or less,
(j) the ratio of carboxylic acid monomers in the polycarboxylic acid-based dispersant (1) is 30 to 65 weight-%, and any one of the following (j-1) to (j-3) is further met:
   (j-1) the ratio of carboxylic acid monomers in the polycarboxylic acid-based dispersant (2) is 20 (exclusive) to 30 weight-%, and any one of the following (j-1-1) to (j-1-6) is further met:
      (j-1-1) the solids content is 30 (exclusive) to 40 weight-%, and the dispersants are neutralized with potassium hydroxide or sodium hydroxide, and the degree of neutralization thereof is 0.55 or less,
      (j-1-2) the solids content is 20 (exclusive) to 30 weight-%, and the dispersants are neutralized with potassium hydroxide or sodium hydroxide, and the degree of neutralization thereof is 1 or less,
      (j-1-3) the solids content is 20 weight-% or less, and the dispersants are neutralized with potassium hydroxide or sodium hydroxide, and the degree of neutralization thereof is 1.5 or less,
      (j-1-4) the solids content is 30 (exclusive) to 40 weight-%, and the dispersants are neutralized with triethanolamine, and the degree of neutralization thereof is 1 or less,
      (j-1-5) the solids content is 20 (exclusive) to 30 weight-%, and the dispersants are neutralized with triethanolamine, and the degree of neutralization thereof is 1 or less,
      (j-1-6) the solids content is 20 weight-% or less, and the dispersants are neutralized with triethanolamine, and the degree of neutralization thereof is 1.5 or less,
   (j-2) the ratio of carboxylic acid monomers in the polycarboxylic acid-based dispersant (2) is 10 (exclusive) to 20 weight-%, and any one of the following (j-2-1) to (j-2-5) is further met:
      (j-2-1) the solids content is 30 (exclusive) to 40 weight-%, and the dispersants are neutralized with potassium hydroxide or sodium hydroxide, and the degree of neutralization thereof is 0.5 or less,
      (j-2-2) the solids content is 20 (exclusive) to 30 weight-%, and the dispersants are neutralized with potassium hydroxide or sodium hydroxide, and the degree of neutralization thereof is 0.85 or less,
      (j-2-3) the solids content is 20 weight-% or less, and the dispersants are neutralized with potassium hydroxide or sodium hydroxide, and the degree of neutralization thereof is 1 or less,
      (j-2-4) the solids content is 30 (exclusive) to 40 weight-%, and the dispersants are neutralized with triethanolamine, and the degree of neutralization thereof is 1 or less,
      (j-2-5) the solids content is 30 weight-% or less, and the dispersants are neutralized with triethanolamine, and the degree of neutralization thereof is 1.5 or less,
   (j-3) the ratio of carboxylic acid monomers in the polycarboxylic acid-based dispersant (2) is 10 weight-% or less, and any one of the following (j-3-1) to (j-3-6) is further met:
      (j-3-1) the solids content is 30 (exclusive) to 40 weight-%, and the dispersants are neutralized with potassium hydroxide or sodium hydroxide, and the degree of neutralization thereof is 0.35 or less,
      (j-3-2) the solids content is 20 (exclusive) to 30 weight-%, and the dispersants are neutralized with potassium hydroxide or sodium hydroxide, and the degree of neutralization thereof is 0.7 or less,
      (j-3-3) the solids content is 20 weight-% or less, and the dispersants are neutralized with potassium hydroxide or sodium hydroxide, and the degree of neutralization thereof is 1 or less,
      (j-3-4) the solids content is 30 (exclusive) to 40 weight-%, and the dispersants are neutralized with triethanolamine, and the degree of neutralization thereof is 0.35 or less,
      (j-3-5) the solids content is 20 (exclusive) to 30 weight-%, and the dispersants are neutralized with triethanolamine, and the degree of neutralization thereof is 1 or less,
      (j-3-6) the solids content is 20 weight-% or less, and the dispersants are neutralized with triethanolamine, and the degree of neutralization thereof is 1.5 or less.

The admixture for a hydraulic composition according to this invention is added to hydraulic slurry preferably in such an amount that the total amount of the dispersant (1) or an oxycarboxylic acid (salt), and the dispersant (2) is 0.05 to 3.0 weight-%, particularly 0.1 to 0.5 weight-% relative to hydraulic powders.

When the dispersants (1a) and (2a) are simultaneously used, the compounding ratio of the two, that is, the dispersant (1a) /the dispersant (2a), is in the range of preferably 0.1/99.9 to 99/1 (weight ratio of solids content), more preferably 1/99 to 50/50, still more preferably 5/95 to 30/70, from the viewpoint of fluidity retention (slump retention), in addition to achievement of the electric conductivity in the diluted products.

When the admixture for a hydraulic composition according to this invention comprises the dispersants (1a) and (2a), the admixture is added to a hydraulic slurry, that is, a hydraulic composition including no dispersant of the admixture, preferably in such an amount that the total amount of the dispersants (1a) and (2a) may be 0.05 to 3.0 weight-%, particularly 0.1 to 0.5 weight-% in terms of solids content relative to hydraulic powders.

Further, when the admixture for a hydraulic composition according to this invention comprises the dispersants (1a) and (2a), a mixture prepared by compounding the dispersants (1a) and (2a) may be added, or the two may be added separately, and there is no limit to the way to add the two.

The admixture for a hydraulic composition according to this invention may be used in combination with other dispersants. In this case the requirement for electric conductivity upon dilution may be preferably met. The dispersants may be those used generally as admixtures for concrete and may be preferably a high-range water-reducing agents (superplasticizer) or a water-reducing agents(plasticizer), such as a naphthalene sulfonate-formaldehyde condensate, a melamine sulfonate-formamide condensate, refined ligninsulfonic acid or a salt thereof, polystyrene sulfonate, cement dispersants having a phenol skeleton (for example, a formaldehyde co-condensate of phenolsulfonic acid with another copolymerizable monomer) and cement dispersants based on anilinesulfonic acid (for example, a formaldehyde co-condensate of anilinesulfonic acid with another copolymerizable monomer).

The admixture for a hydraulic composition according to this invention may be used for a hydraulic composition of cement for civil engineering, building, precast concrete products or the like. The hydraulic composition is not specified. Cement may be preferably normal portland cement, high-early strength portland cement, ultra high-early strength portland cement or CEMI listed in (Categorized in) European Standard EN197-1 or the like. A hydraulic powder such as blast furnace slag, fly ash or silica fume or a non-hydraulic lime stone powder etc. may be contained. In addition, silica fume cement or blast furnace slag blended cement, CEMII, CEMIII, CEMIV or CEMV, listed in(categorized in) European Standard EN197-1, may be used.

The admixture for a hydraulic composition according to this invention can be used in combination with known additives (materials). Examples of such additives include an AE agent, an AE water-reducing agent(plasticizer), a fluidizing agent, a high-range water reducing agent(superplasticizer), a retardant, a high-early-strength agent, an accelerator, a foaming agent, a water-retaining agent, a thickener, a waterproofing agent, a defoaming agent, a water-soluble polymer, various surfactants, siliceous sand, high-furnace slag, fly ash, silica fume etc.

### <hydraulic composition>

The admixture for a hydraulic composition according to this invention is added to various a hydraulic composition constituting hydraulic powder-containing cement pastes, mortar and concrete, and the kind of the hydraulic composition is not limited. The weight ratio of water to hydraulic powder(W/C) is preferably 0.7 or less, more preferably 0.6 or less, specially preferably 0.55 or less.

In particular, this invention provides a hydraulic composition comprising the invented admixture for a hydraulic composition added to water- and hydraulic powder-containing hydraulic slurry having a sulfate ion concentration of 2,500 to 40,000 mg/kg (ppm) in an aqueous solution thereof. In this hydraulic slurry, the concentration of sulfate ions in the aqueous solution is preferably 4,000 mg/kg (ppm) or more, more preferably 6,000 mg/kg (ppm) or more, still more preferably 7,000 mg/kg (ppm) or more.

The concentration of sulfate ions in the aqueous solution is preferably 6,000 to 40,000 mg/kg (ppm), still more preferably 7,000 to 40,000 mg/kg (ppm).

The invention may be preferably applied to a hydraulic slurry in which an amount of sulfate ion eluted from cement is 10 *µ*mol or more per 1 g of cement, more preferably 25 *µ*mol or more.

As the method of measuring the concentration of sulfate ions, a method of centrifuging the hydraulic slurry and measuring the concentration in the separated aqueous solution may be used. The centrifugation for obtaining the separated aqueous solution may be carried out under the conditions of 3000 rpm (with an arm radius of 17 cm) and 10 minutes.

Using the supernatant water obtained by this centrifugation, the concentration of sulfate ions was determined by ion chromatography (unit: Dionex DX-120; column: AS9-HS4; eluents: 5 mmol/L aqueous sodium bicarbonate, 12 mmol/L aqueous sodium carbonate; suppressor: 25 mmol/L aqueous sulfuric acid; detection: electric conductivity).

According to this invention, there can be obtained a liquid admixture for a hydraulic composition, which is capable of endowing a hydraulic composition with excellent fluidity and fluidity retention and simultaneously exhibiting this effect stably without being influenced by its storage period.

### EXAMPLE

As the concrete composition, Composition 1 or 2 in Table 1 was used. As the admixture, dispersant (1) in Table 2 and dispersant (2) in Table 3 were compounded and combined as shown in Table 4, and a neutralizing agent shown in Table 4 was added thereto to prepare a liquid admixture (balance: water) whose 5-fold dilution has the electric conductivity (determined under the conditions described above) shown in Table 4. The dispersion retention and shelf stability of the resulting admixture were evaluated in the following manner. The results are shown in Table 4.

### (i) Dispersion retention

The hydraulic materials in Table 1 were mixed (63 rpm, 120 seconds) in a mortar mixer, to prepare mortar. During this preparation, the dosage of the admixture was adjusted to obtain the mortar flow in the range of 220 mm ± 10 mm without tapping. The mortar flow value was measured just after mixing (F₀) and 90 minutes later (F₉₀). In terms of the percentage [(F₉₀/F₀) × 100] thereof to the initial flow value (F₀), the degree of dispersion retention (%) was calculated. The degree of dispersion retention thus determined was evaluated according to the following criteria:
⊚: The degree of dispersion retention is 90% or more.
○: The degree of dispersion retention is 80 to less than 90%.
Δ: The degree of dispersion retention is 70 to less than 80%.
×: The degree of dispersion retention is less than 70%.

### (ii) Shelf stability

The admixture in Table 4 was stored at 20°C for 1 month and then observed for its outer appearance, and when it was homogenious, "○" was given, while it was separated, "×" was given. The evaluation "○" means that the admixture is maintained in the form of a single-phase homogeneous aqueous solution.

**Table 1**

| | | Mixture proportions | | | | |
|---|---|---|---|---|---|---|
| | W/C | W(g) | C | | S | Sulfate ion concentration |
| | | | (g) | Type | (g) | |
| Composition 1 | 0.45 | 360 | 800 | CamentA | 1500 | 7000 mg/kg |
| Composition2 | 0.45 | 360 | 800 | CementB | 1500 | 15000mg/kg |

| | | | | | | |
|---|---|---|---|---|---|---|
| CementA: Normal Portland cement(Taiheiyo) (specific gravity 3.14, B.V.3400) Cement B: Normal Portland cement(Lafarge)(specific gravity 3.14, B.V.3620) S: Kimitsu Pit sand (F.M.2.42 S.G.2.63) Sulfate ion concentration: The concentration of sulfate ions in the separated aqueous solution obtained by centrifugation under the conditions described in the description of the application. | | | | | | |

**Table 2**

| | Dispersant(1)No. | | | | | | |
|---|---|---|---|---|---|---|---|
| | 1 | 2 | 3 | 4 | 5 | 6 | 7 |
| Monomer | Acrylic acid (100 mol-%) | Acrylic acid (100 mol-%) | Maleic anhydride /Acrylic acid= 60/40(mol-%) | Maleic anhydride /Acrylic acid= 70/30(mol-%) | Acrylic acid (100 mol-%) | Allyl alcohol EO₅ /Maleic anhydride= 25/75(mol-%) | Methanol EO₉. methacrylic acid monoester/metha crylic acid= 25/75(mol-%) |
| Molecular weight | 9000 | 13000 | 10000 | 18000 | 10000 | 5000 | 20000 |
| Solid content (weight-%) | 45 43 | 48 48 | 40 40 | 50 50 | 46 46 | 50 50 | 40 40 |
| Ratio of carboxylic acid monomers (weight-%) | 100 | 100 | 100 | 100 | 100 | 51.4 | 34.2 |

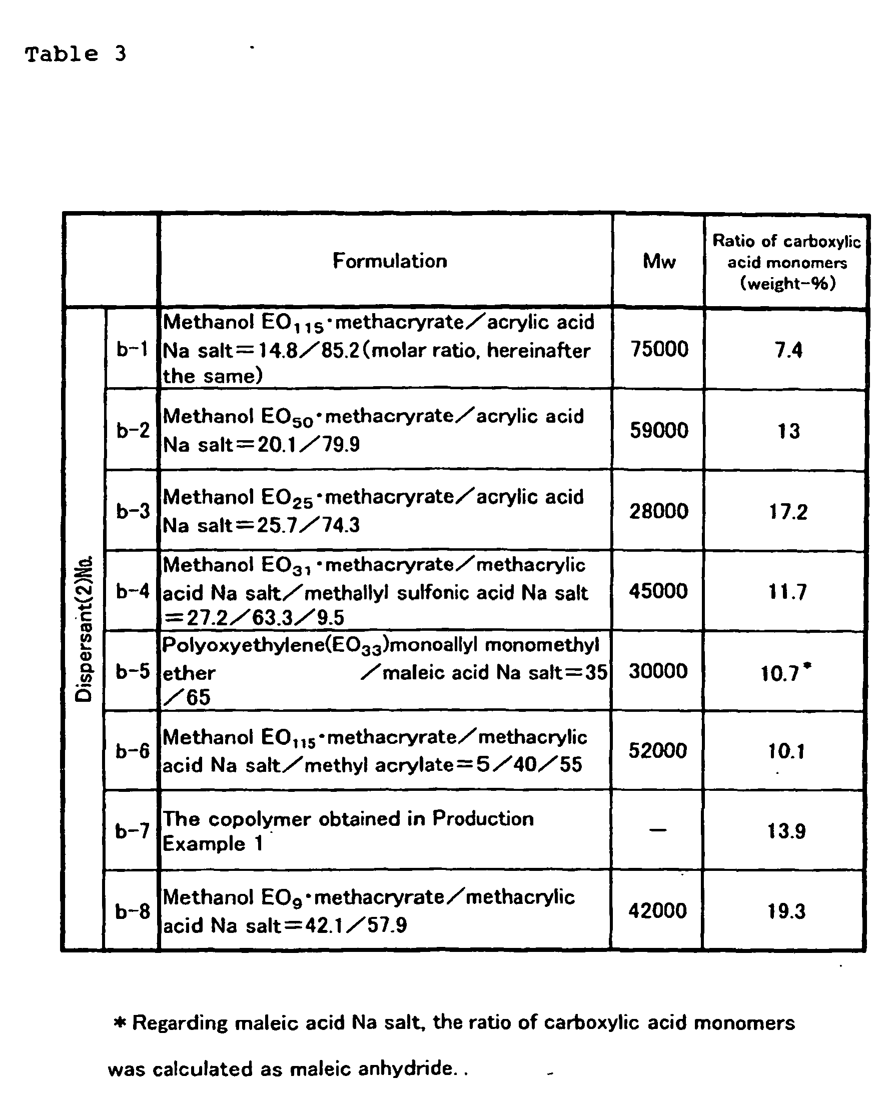

In the table, EO is an oxyethylene group, and its assigned number is average polymerization degree. Mw is weight-average molecular weight. b-7 is a product obtained in Production Example 1 below.

### Production Example 1

### (1) Monomers

A copolymer was produced from the following monomers by the process described below.
- A-1: Methoxy polyethylene glycol monomethacrylate (number of added ethylene oxide molecules on average = 9; weight-average molecular weight, 496)
- A-2 : Methoxy polyethylene glycol monomethacrylate (number of added ethylene oxide molecules on average = 120; weight-average molecular weight, 5380)
- B-1 : methacrylic acid

### (2) Production of the copolymer (dispersant b-7)

Water, 1107 parts by weight, was introduced into a glass reaction vessel and then heated up to 70°C in a nitrogen atmosphere. Then, 3 solutions, that is, a monomer mixture (1) consisting of 179 parts by weight of the monomer A-1, 343 parts by weight of the monomer A-2, 101 parts by weight of the monomer B-1 and 281 parts by weight of water, 41.0 parts by weight of 10% aqueous 2-mercaptoethanol, and 36.5 parts by weight of 10% aqueous ammonium persulfate, were simultaneously dropped thereto over 55 minutes and subjected to copolymerization reaction, and then 3 solutions, that is, a monomer mixture (2) consisting of 76 parts by weight of the monomer A-1, 124 parts by weight of the monomer A-2, 25.7 parts by weight of the monomer B-1 and 103 parts by weight of water, 12.0 parts by weight of 10% aqueous 2-mercaptoethanol, and 10.8 parts by weight of 10% aqueous ammonium persulfate, were simultaneously dropped over 20 minutes to the above reaction system and subjected to copolymerization reaction, and further 3 solutions, that is, a monomer mixture (3) consisting of 62 parts by weight of the monomer A-1, 94 parts by weight of the monomer A-2, 15 parts by weight of the monomer B-1 and 78 parts by weight of water, 18 parts by weight of 10% aqueous 2-mercaptoethanol, and 7.2 parts by weight of 10% aqueous ammonium persulfate, were simultaneously dropped thereto over 15 minutes thereto and subjected to copolymerization reaction, and the reaction was carried out in this manner for 90 minutes in total. After dropping was finished, the reaction solution was aged at the same temperature for 1 hour, and 27.3 parts by weight of 10% aqueous ammonium persulfate was dropped thereto over 10 minutes, and the reaction solution was aged at 70°C for 2 hours to complete the polymerization reaction. Further, the reaction solution was neutralized with 59 parts by weight of 48% aqueous sodium hydroxide to give the copolymer.

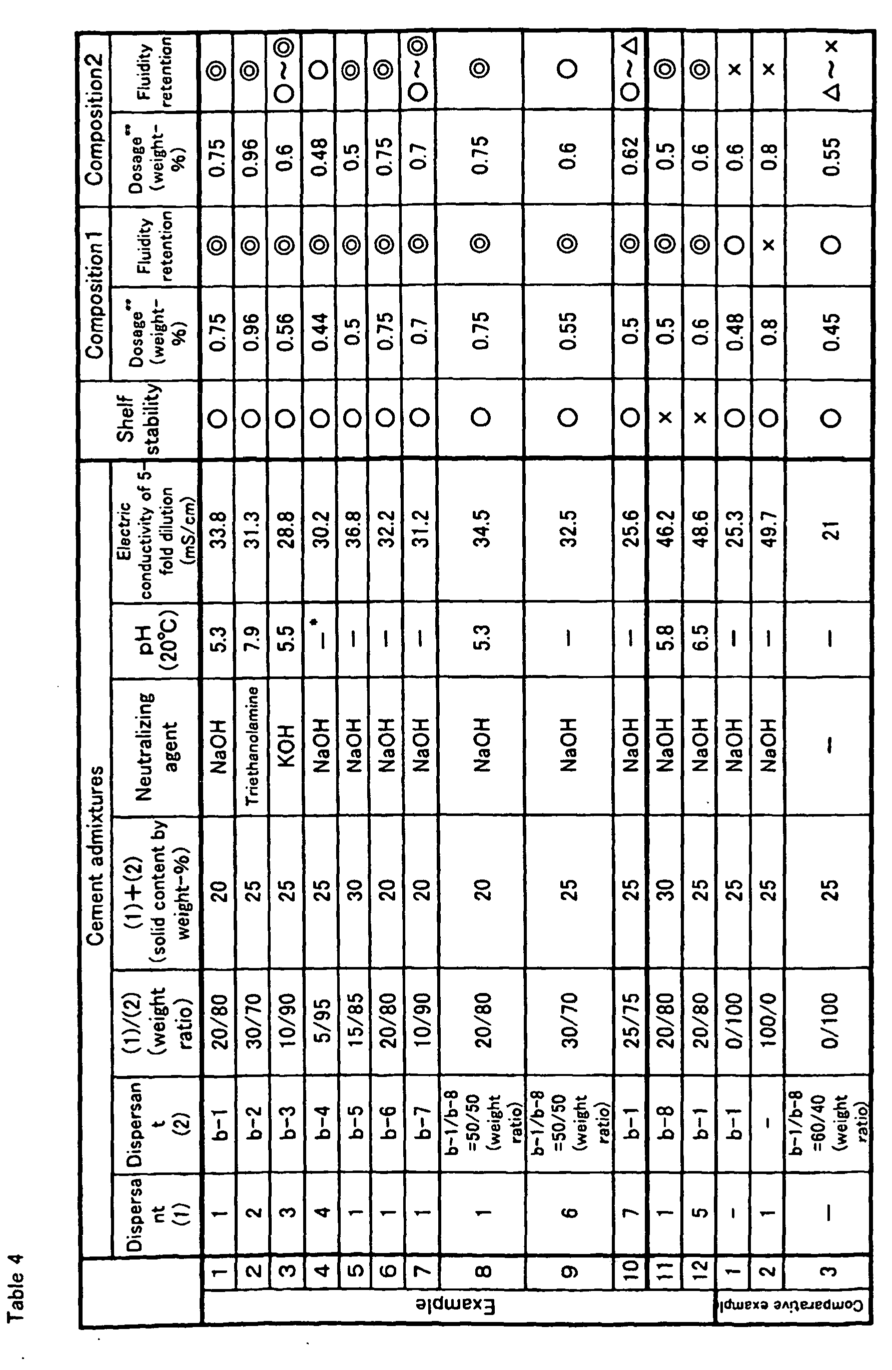

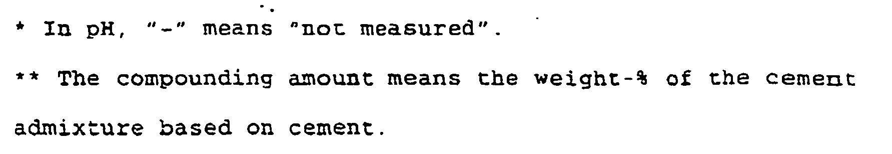

It is shown in Example 1 to 12, that the admixture including the dispersants (1) and (2), is provided with a good fluidity retention. The invention is therefore provided with a constant retention regardless changed concentrations of sulfate ion eluting from cement.

In Example 11 and 12 an excess neutralization caused an insufficient stability of the product. It is noted in Comparative Example 2 using the dispersant 1 only that the dispersion was initially realized, but coagulation happened immediately. No fluidity retention was accordingly obtained. It is noted in Comparative Example 1 and 3 using the dispersant 2 only that a good fluidity retention was found in the composition 1, but a bad fluidity retention was found in the composition 2 using cement including a large amount of eluted sulfate ion. Combination of No. 1 as the dispersant (1) with (b-1) and (b-2) as the dispersant (2) was evaluated in view of pH and stability, changing a solid concentration (concentration by the total solid of the dispersants (1) and (2)), a neutralizing agent and a neutralization degree. Sodium hydroxide(NaOH), potassium hydroxide(KOH) or triethanolamine (TEA) was used as the neutralizing agent. Test results are shown in Table 5.

Using an oxycarboxylic acid (sodium gluconate) as the dispersant (1), shelf stability and dispersion retention were evaluated with concrete composition 3 or 4 shown in Table 6. The dispersant (2) neutralized with sodium hydroxide at the neutralization degree of 0.7 and sodium oxycarboxylic acid were used. Test results are shown in Table 7.

| Dispersant | | Compounding ratio by weight | | Solid | Neutralizing | Neutralization | PH | Shelf |
|---|---|---|---|---|---|---|---|---|
| Dispersant(1) | Dispersant(2) | Dispersant(1) | Dispersant(2) | content (weight-%) | agent | degree | | stability |
| 1 | b-1 | 30 | 70 | 20 | NaOH | 0.35 | 5.4 | × |
| | | | | | | 0.3 | 5.2 | ○ |
| 1 | b-1 | 30 | 70 | 30 | NAOH | 0.2 | 4.9 | × |
| | | | | | | 0.15 | 4.7 | ○ |
| 1 | b-1 | 30 | 70 | 40 | NAOH | 0.1 | 4.9 | × |
| | | | | | | 0.5 | 4.6 | ○ |
| 1 | b-5 | 30 | 70 | 20 | NaOH | 0.4 | 5.9 | × |
| | | | | | | 0.35 | 5.6 | ○ |
| 1 | b-5 | 30 | 70 | 30 | NaOH | 0.25 | 5.1 | × |
| | | | | | | 0.2 | 4.9 | ○ |
| 1 | b-5 | 30 | 70 | 40 | NaOH | 0.15 | 4.8 | × |
| | | | | | | 0.1 | 4.6 | ○ |
| 1 | b-1 | 30 | 70 | 20 | KOH | 0.4 | 5.7 | × |
| | | | | | | 0.35 | 5.5 | ○ |
| 1 | b-1 | 30 | 70 | 30 | KOH | 0.2 | 5 | × |
| | | | | | | 0.15 | 4.8 | ○ |
| 1 | b-1 | 30 | 70 | 40 | KOH | 0.1 | 4.7 | × |
| | | | | | | 0.5 | 4.5 | ○ |
| 1 | b-5 | 30 | 70 | 20 | KOH | 0.5 | 6.9 | × |
| | | | | | | 0.45 | 6.7 | ○ |
| 1 | b-5 | 30 | 70 | 30 | KOH | 0.25 | 5.2 | × |
| | | | | | | 0.2 | 5 | ○ |
| 1 | b-5 | 30 | 70 | 40 | KOH | 0.15 | 4.9 | × |
| | | | | | | 0.1 | 4.7 | ○ |
| 1 | b-1 | 30 | 70 | 20 | TEA | 1 | 7.95 | ○ |
| 1 | b-1 | 30 | 70 | 30 | TEA | 0.25 | 5.1 | × |
| | | | | | | 0.2 | 4.9 | ○ |
| 1 | b-1 | 30 | 70 | 40 | TEA | 0.2 | 5.1 | × |
| | | | | | | 0.15 | 4.9 | ○ |
| 1 | b-5 | 30 | 70 | 20 | TEA | 1 | 8.1 | ○ |
| 1 | b-5 | 30 | 70 | 30 | TEA | 1 | 8.2 | ○ |
| 1 | b-5 | 30 | 70 | 40 | TEA | 0.2 | 5 5 | × |
| | | | | | | 0.15 | 4.8 | ○ |
| 1 | b-1 | 10 | 90 | 30 | NaOH | 0.25 | 5.1 | × |
| | | | | | | 0.2 | 4.9 | ○ |
| 1 | b-1 | 10 | 90 | 30 | KOH | 0.3 | 5.3 | × |
| | | | | | | 0.25 | 5.1 | ○ |
| 1 | b-1 | 10 | 90 | 30 | TEA | 0.4 | 5.6 | × |
| | | | | | | 0.35 | 5.4 | ○ |
| 1 | b-5 | 10 | 90 | 30 | NaOH | 0.3 | 5.6 | × |
| | | | | | | 0.25 | 5.4 | ○ |
| 1 | b-5 | 10 | 90 | 30 | KOH | 0.3 | 5.7 | × |
| | | | | | | 0.25 | 5.5 | ○ |
| 1 | b-5 | 10 | 90 | 30 | TEA | 0.83 | 8.09 | ○ |

| | | | | | | | | |
|---|---|---|---|---|---|---|---|---|
| NaOH; Sodium hydroxide, KOH; Potassium hydroxide,TEA; Triethnolamine | | | | | | | | |

**Table 6**

| | | Mixture proportions | | | | Sulfate |
|---|---|---|---|---|---|---|
| | W/C | | C | | S (g) | ion concent ration( mg/kg) |
| | | W | (g) | Type | | |
| Composi tion3 | 0.45 | 360 | 800 | Cement C | 1500 | 6000 |
| Composi tion4 | 0.45 | 360 | 800 | Cement D | 1500 | 18000 |

| | | | | | | |
|---|---|---|---|---|---|---|
| Cement C: Normal Portland cement (Taiheiyo) Cement D: Normal Portland cement (Norcem) | | | | | | |

**Table 7**

| | Cement admixture | | | | | Composition3 | | Composition4 | |
|---|---|---|---|---|---|---|---|---|---|
| | Oxycarbonic acid | Dispersant (2) | Oxycarboxylic acid/(2) weight ratio | Oxycarboxylic acid+(2) solid content by weight | Shelf stability | dosage (weight-%) | Fluidity retention | doage (weight-%) | Fluidity retention |
| Example | Gluconic acid Na | b-1/b-8 | 20/(48/32) | 25% | ○ | 0.48 | ⊚ | 0.504 | ⊚ |
| Comparative example | - | b-1/b-8 | 0/(60/40) | 25% | ○ | 0.48 | ○ | 0.504 | × |

## Claims

1. An admixture for a hydraulic composition having a pH of from 4 to 9 and comprising a homogeneous mixed liquid comprising at least one polycarboxylic acid-based dispersant (1) comprising a polymer wherein the ratio of carboxylic acid monomers is higher than 30% by weight an at least one polycarboxylic acid-based dispersant (2) comprising a polymer wherein the ratio of carboxylic acid monomers is 3 to 30% by weight, wherein the total solid of the polycarboxylic acid-based dispersant (1) and the polycarboxylic acid-based dispersant (2) is 10 to 40% by weight in the admixture and the weight ratio [(1)/(2)] of the polycarboxylic acid-based dispersant (1) to the polycarboxylic acid-based dispersant (2) is 3/97 to 40/60 and wherein the admixture satisfies any one of the following conditions (a) to (f):
(a) the total amount (hereinafter referred to as solids content) of the polycarboxylic acid-based dispersants (1) and (2) in the admixture for a hydraulic composition is more than 30 to 40 weight-%, and the dispersants are neutralized with potassium hydroxide or sodium hydroxide, and the degree of neutralization thereof is 0.15 or less,
(b) the solids content is more than 20 to 30 weight-%, and the dispersants are neutralized with potassium hydroxide or sodium hydroxide, and the degree of neutralization thereof is 0.4 or less,
(c) the solids content is 20 weight-% or less, and the dispersants are neutralized with potassium hydroxide or sodium hydroxide, and the degree of neutralization thereof is 1 or less,
(d) the solids content is more than 30 to 40 weight-%, and the dispersants are neutralized with triethanolamine, and the degree of neutralization thereof is 0.25,
(e) the solids content is more than 20 to 30 weight-%, and the dispersants are neutralized with triethanolamine, and the degree of neutralization thereof is 1 or less, and
(f) the solids content is 20 weight-% or less, and the dispersants are neutralized with triethanolamine, and the degree of neutralization thereof is 1.5 or less.

2. The admixture according to Claim 1, being in the form of a homogeneous aqueous solution, wherein a 5-fold (ratio by weight) dilution of the admixture with water has an electric conductivity of not higher than 45 mS/cm at 25°C.

3. The admixture according to Claims 1 or 2, in which (1) the polycarboxylic acid-based dispersant is selected from 1) and (2) the polycarboxylic acid-based dispersant is selected from 2) :
1) dispersants comprising a water-soluble salt of a homopolymer of an unsaturated carboxylic acid selected from an unsaturated monocarboxylic acid and an unsaturated dicarboxylic acid or of a copolymer of two or more of the unsaturated carboxylic acids,
2) dispersants comprising a copolymer obtained by polymerizing a monomer (a) represented by formula (A): 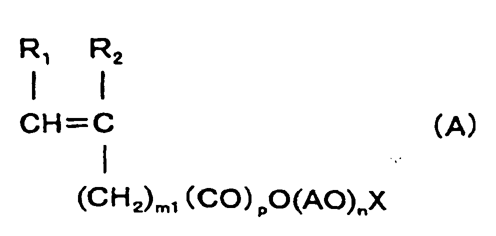
wherein R₁ and R₂ each represents a hydrogen atom or a methyl group, m1 is a number of 0 to 2, p is 0 or 1, AO is a C₂₋₄ oxyalkylene group, n is a number of 2 to 300 and X represents a hydrogen atom or a C₁₋₂₂ alkyl group;
with at least one monomer (b) selected from compounds represented by formulae (B) and (C): 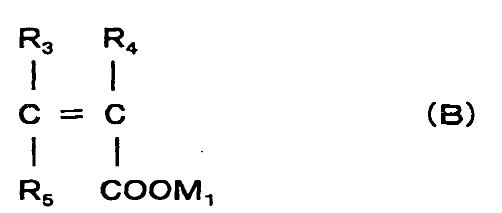 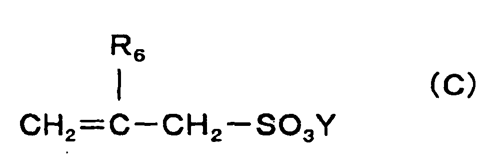 wherein R₃ to R₅ are the same as or different from one another and each represent a hydrogen atom, a methyl group or (CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or a substituted amine salt and m2 is a number of 0 to 2.

4. A process for preparing an admixture for a hydraulic composition, being homogeneous and having a pH of 4 to 9, comprising adding an alkali to an aqueous solution comprising the polycarboxylic acid-based dispersant (1) described in Claim 1 and the polycarboxylic acid-based dispersant (2) described in Claim 1 in the total solid of 10 to 40 percent by weight.

5. Use of the admixture according to any one of the Claims 1 to 3 for improving the fluidity retention of a hydraulic slurry comprising water and a hydraulic powder and having a sulfate ion concentration of 2,500 to 40,000 mg/kg in the aqueous solution thereof.

6. The use according to Claim 5, wherein the sulfate ion concentration is 6,000 to 40,000 mg/kg.

## Patentansprüche

1. Zumischung für eine hydraulische Zusammensetzung mit einem pH von 4 bis 9 und umfassend eine homogene gemischte Flüssigkeit, umfassend zumindest ein Dispergiermittel (1) auf Polycarbonsäurebasis, umfassend ein Polymer, worin das Verhältnis der Carbonsäuremonomeren höher als 30 Gew.-% ist, und zumindest ein Dispersionsmittel (2) auf Polycarbonsäurebasis, umfassend ein Polymer, worin das Verhältnis der Carbonsäuremonomeren 3 bis 30 Gew.-% ist, worin der Gesamtfeststoffgehalt des Dispersionsmittels (1) auf Polycarbonsäurebasis und des Dispersionsmittels (2) auf Polycarbonsäurebasis 10 bis 40 Gew.-% in der Zumischung ist und das Gewichtsverhältnis (1)/(2) des Dispersionsmittels (1) auf Polycarbonsäurebasis zum Dispersionsmittel (2) auf Polycarbonsäurebasis 3/97 bis 40/60 ist, und worin die Zumischung eine der folgenden Bedingungen (a) bis (f) erfüllt:
(a) die Gesamtmenge (nachfolgend Feststoffgehalt) der Dispersionsmittel (1) und (2) auf Polycarbonsäurebasis in der Zumischung für eine hydraulische Zusammensetzung ist mehr als 30 bis 40 Gew.-% und die Dispersionsmittel sind mit Kaliumhydroxid oder Natriumhydroxid neutralisiert und der Neutralisierungsgrad davon ist 0,15 oder weniger,
(b) der Feststoffgehalt ist mehr als 20 bis 30 Gew.-% und die Dispersionsmittel sind mit Kaliumhydroxid oder Natriumhydroxid dispergiert und der Neutralisierungsgrad davon ist 0,4 oder weniger,
(c) der Feststoffgehalt ist 20 Gew.-% oder weniger und die Dispersionsmittel sind mit Kaliumhydroxid oder Natriumhydroxid neutralisiert und der Neutralisierungsgrad davon ist 1 oder weniger,
(d) der Feststoffgehalt ist mehr als 30 bis 40 Gew.-% und die Dispersionsmittel sind mit Triethanolamin neutralisiert und der Neutralisierungsgrad davon ist 0,25,
(e) der Feststoffgehalt ist mehr als 20 bis 30 Gew.-% und die Dispersionsmittel sind mit Triethanolamin neutralisiert und der Neutralisierungsgrad davon ist 1 oder weniger und
(f) der Feststoffgehalt ist 20 Gew.-% oder weniger und die Dispersionsmittel sind mit Triethanolamin neutralisiert und der Neutralisierungsgrad davon ist 1,5 oder weniger.

2. Zumischung nach Anspruch 1, die in der Form einer homogenen wässrigen Lösung vorliegt, worin eine fünffache Verdünnung (Gewichtsverhältnis) der Zumischung mit Wasser eine elektrische Leitfähigkeit von nicht mehr als 45 mS/cm bei 25°C hat.

3. Zumischung nach Anspruch 1 oder 2, worin das Dispersionsmittel (1) auf Polycarbonsäurebasis ausgewählt ist aus (1) und das Dispersionsmittel (2) auf Polycarbonsäurebasis ausgewählt ist aus (2):
(1) Dispersionsmittel, umfassend ein wasserlösliches Salz eines Homopolymers einer ungesättigten Carbonsäure, ausgewählt aus einer ungesättigten Monocarbonsäure und einer ungesättigten Dicarbonsäure oder einem Copolymer von zwei oder mehreren der ungesättigten Carbonsäuren,
(2) Dispersionsmittel, umfassend ein Copolymer, erhalten durch Copolymerisation eines Monomers (a) mit der Formel (A): 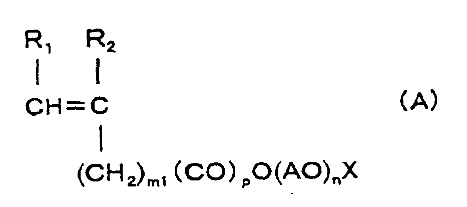
worin R₁ und R₂ jeweils ein Wasserstoffatom oder eine Methylgruppe sind, m1 eine Zahl von 0 bis 2 ist, p 0 oder 1 ist, AO eine C₂₋₄ Oxyalkylengruppe ist, n eine Zahl von 2 bis 300 ist und X ein Wasserstoffatom oder eine C₁₋₂₂ Alkylgruppe ist
mit zumindest einem Monomer (b), ausgewählt aus Verbindungen mit den Formeln (B) und (C): 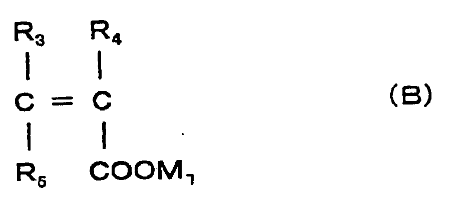 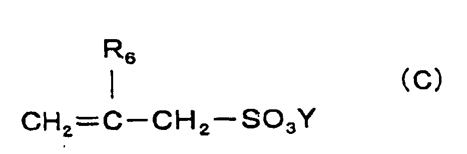 worin R₃ bis R₅ gleich oder verschieden sind und jeweils ein Wasserstoffatom, eine Methylgruppe oder (CH₂)ₘ₂COOM₂ sind, R₆ Wasserstoffatom oder Methylgruppe ist, M₁, M₂ und Y gleich oder verschieden zueinander sind und jeweils ein Wasserstoffatom, ein Alkalimetall, Erdalkalimetall, Ammonium, Alkylammonium oder substituiertes Alkylammonium, Aminsalz oder substituiertes Aminsalz sind und m2 eine Zahl von 0 bis 2 ist.

4. Verfahren zur Herstellung einer Zumischung für eine hydraulische Zusammensetzung, die homogen ist und einen pH von 4 bis 9 hat, umfassend die Zugabe eines Alkali zu einer wässrigen Lösung, umfassend das Dispersionsmittel (1) auf Polycarbonsäurebasis gemäß Anspruch 1 und das Dispersionsmittel (2) auf Polycarbonsäurebasis gemäß Anspruch (1) in einem gesamten Feststoffgehalt von 10 bis 40 Gew.-%.

5. Verwendung der Zumischung nach einem der Ansprüche 1 bis 3 zur Verbesserung der Fließfähigkeitsbeibehaltung einer hydraulischen Aufschlämmung, umfassend Wasser und ein hydraulisches Pulver und mit einer Sulfationenkonzentration von 2.500 bis 40.000 mg/kg in der wässrigen Lösung davon.

6. Verwendung nach Anspruch 5, worin die Sulfationenkonzentration 6.000 bis 40.000 mg/kg ist.

## Revendications

1. Adjuvant pour une composition hydraulique ayant un pH de 4 à 9 et comprenant un liquide mixte homogène comprenant au moins un dispersant à base de poly(acide carboxylique) (1) comprenant un polymère dans lequel le rapport des monomères acide carboxylique est supérieur à 30 % en poids et au moins un dispersant à base de poly(acide carboxylique) (2) comprenant un polymère dans lequel le rapport des monomères acide carboxylique est de 3 à 30 % en poids, où la teneur totale en matières solides du dispersant à base de poly(acide carboxylique) (1) et du dispersant à base de poly(acide carboxylique) (2) est de 10 à 40 % en poids dans l'adjuvant et le rapport en poids [(1)/(2)] du dispersant à base de poly(acide carboxylique) (1) au dispersant à base de poly(acide carboxylique) (2) est de 3/97 à 40/60 et où l'adjuvant satisfait à l'une quelconque des conditions (a) à (f) suivantes :
(a) la quantité totale (appelée teneur en matières solides dans la suite) des dispersants à base de poly(acide carboxylique) (1) et (2) dans l'adjuvant pour une composition hydraulique est plus que 30 à 40 % en poids, et les dispersants sont neutralisés avec de l'hydroxyde de potassium ou de l'hydroxyde de sodium, et le degré de neutralisation de ceux-ci est de 0,15 ou moins,
(b) la teneur en matières solides est plus que 20 à 30 % en poids, et les dispersants sont neutralisés avec de l'hydroxyde de potassium ou de l'hydroxyde de sodium, et le degré de neutralisation de ceux-ci est de 0,4 ou moins,
(c) la teneur en matières solides est de 20 % en poids ou moins, et les dispersants sont neutralisés avec de l'hydroxyde de potassium ou de l'hydroxyde de sodium, et le degré de neutralisation de ceux-ci est de 1 ou moins,
(d) la teneur en matières solides est plus que 30 à 40 % en poids, et les dispersants sont neutralisés avec de la triéthanolamine, et le degré de neutralisation de ceux-ci est de 0,25,
(e) la teneur en matières solides est plus que 20 à 30 % en poids, et les dispersants sont neutralisés avec de la triéthanolamine, et le degré de neutralisation de ceux-ci est de 1 ou moins,
(f) la teneur en matières solides est de 20 % en poids ou moins, et les dispersants sont neutralisés avec de la triéthanolamine, et le degré de neutralisation de ceux-ci est de 1,5 ou moins.

2. Adjuvant selon la revendication 1, qui est sous forme d'une solution aqueuse homogène, dans lequel l'adjuvant dilué dans un rapport de 5 (rapport en poids) avec de l'eau a une conductivité électrique non supérieure à 45 mS/cm à 25°C.

3. Adjuvant selon la revendication 1 ou 2, dans lequel le dispersant à base de poly(acide carboxylique) (1) est choisi parmi 1) et le dispersant à base de poly(acide carboxylique) (2) est choisi parmi 2) :
1) les dispersants comprenant un sel soluble dans l'eau d'un homopolymère d'un acide carboxylique insaturé choisi parmi un acide monocarboxylique insaturé et un acide dicarboxylique insaturé ou d'un copolymère de deux des acides carboxyliques insaturés ou plus,
2) les dispersants comprenant un copolymère obtenu par polymérisation d'un monomère (a) représenté par la formule (A) : 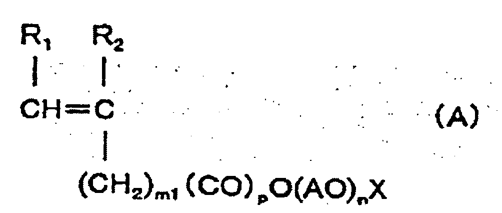
dans laquelle R₁ et R₂ représentent chacun un atome d'hydrogène ou un groupe méthyle, m1 est un nombre de 0 à 2, p vaut 0 ou 1, AO est un groupe oxyalkylène en C₂₋C₄, n est un nombre de 2 à 300 et X représente un atome d'hydrogène ou un groupe alkyle en C₁-C₂₂ ;
avec au moins un monomère (b) choisi parmi les composés représentés par les formules (B) et (C) : 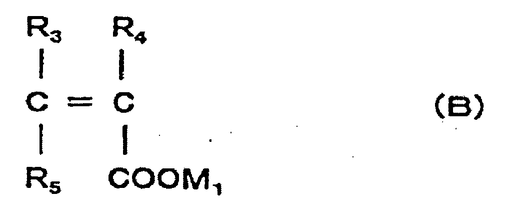 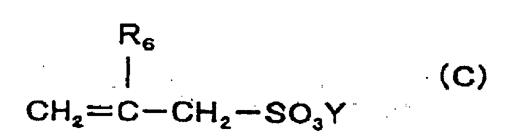 dans lesquelles R₃ à R₅ sont identiques ou différents les uns des autres, et représentent chacun un atome d'hydrogène, un groupe méthyle ou (CH₂)ₘ₂COOM₂, R₆ représente un atome d'hydrogène ou un groupe méthyle, M₁, M₂ et Y sont identiques ou différents les uns des autres et représentent chacun un atome d'hydrogène, un métal alcalin, un métal alcalino-terreux, un ammonium, un alkylammonium ou un alkylammonium substitué, un sel d'amine ou un sel d'amine substituée et m2 est un nombre de 0 à 2.

4. Procédé de préparation d'un adjuvant pour une composition hydraulique, qui est homogène et qui a un pH de 4 à 9, comprenant l'addition d'un produit alcalin à une solution aqueuse comprenant le dispersant à base de poly(acide carboxylique) (1) décrit la revendication 1 et le dispersant à base de poly(acide carboxylique) (2) décrit la revendication 1, dans un rapport total des matières solides de 10 à 40 % en poids.

5. Utilisation du l'adjuvant selon l'une quelconque des revendications 1 à 3, pour améliorer la rétention de la fluidité d'une barbotine hydraulique comprenant de l'eau et une poudre hydraulique et ayant une concentration en ion sulfate de 2 500 à 40 000 mg/kg dans la solution aqueuse de celle-ci.

6. Utilisation selon la revendication 5, dans laquelle la concentration en ion sulfate est de 6 000 à 40 000 mg/kg.
